# EUROPÄISCHE PATENTSCHRIFT

(11) **EP 0 713 835 B1**
(45) Veröffentlichungstag und Bekanntmachung des Hinweises auf die Patenterteilung: **15.10.1997**
(21) Anmeldenummer: 95115295.8
(22) Anmeldetag: 28.09.1995
(51) Int. Cl.: B65G 57/06

(54) **Palettiervorrichtung**
Palletizer
Dispositif de palettisation

(30) Priorität: 22.11.1994 DE 9418577 U
(43) Veröffentlichungstag der Anmeldung: 29.05.1996
(73) Patentinhaber: Icoma FBS GmbH Packtechnik, D-77855 Achern (DE)
(72) Erfinder: Weber, Manfred, D-76534 Baden-Baden (DE); Rübig, Günter, D-77855 Achern (DE); Trenner, Harald, D-77855 Achern (DE)
(74) Vertreter: Patentanwälte Dipl.-Ing. Bodo Thielking Dipl.-Ing. Otto Elbertzhagen

(56) Entgegenhaltungen:
- EP-A- 0 218 833
- DE-A- 2 054 146
- DE-A- 2 804 874
- DE-A- 3 522 982
- DE-A- 4 238 954
- DE-U- 7 918 472

## Beschreibung

Die Erfindung betrifft eine Palettiervorrichtung, insbesondere für Stapel von leeren Verpackungen oder Verpackungszuschnitten, mit einer höhenverstellbaren Palette und einer oberhalb der Palette angeordneten Auflageeinrichtung, auf der die zu palettierenden Güter in ihrer Abwurfposition gehalten werden, wobei die Auflageeinrichtung quer zur Abwurfrichtung verfahrbar ist.

Bei einer bekannten Palettiervorrichtung dieser Art laufen die zu palettierenden Güter gegen Anschläge. Dabei ist jeder Abwurfposition jeweils ein quer zur Förderrichtung verfahrbarer Anschlag zugeordnet. Es werden die Anschläge in der Reihenfolge des Zulaufs betätigt.

Nachdem alle zu palettierenden Güter die der Abwurfposition entsprechende Position oberhalb der Palette bzw. der letzten Beschickungsschicht aufgenommen haben, wird die Ablageeinrichtung horizontal verfahren und es fallen alle zu palettierenden Güter einer horizontalen Schicht auf die darunterliegende Unterlagen, also entweder auf die Palette selbst oder auf die Unterschicht mit zu palettierendem Gut.

Die Palettiergeschwindigkeit dieser bekannten Palettiervorrichtung ist unzureichend.

Der Erfindung liegt deshalb die Aufgabe zugrunde, eine Palettiervorrichtung der als bekannt vorausgesetzten Art so auszubilden, daß sie eine höhere Palettiergeschwindigkeit ermöglicht.

Die Lösung dieser Aufgabe erfolgt dadurch, daß oberhalb der Auflageeinrichtung in einem mindestens einer Schichthöhe der zu palettierenden Güter entsprechenden Abstand ein Transportband angeordnet ist, das mit seiner frontseitigen Umlenkung über der gesamten Grundfläche der Palette verfahrbar ist, wobei ein ebenfalls über die gesamte Grundfläche unabhängig von der Position des Transportbandes in wählbare vorgegebene Positionen verfahrbarer Anschlag vorgesehen ist.

Das Vorsehen eines zusätzlichen Transportbandes oberhalb der Auflageeinrichtung führt zu einer deutlichen Verkürzung der Palettierzeit. So muß bei dieser Vorrichtung nicht die Zuführung unterbrochen werden, während die bereitgestellten, zu palettierenden Güter aus der Auflageeinrichtung abgeworfen bzw. abgelegt werden. Auch während der Abwurfzeit kann das nächste zu palettierende Gut bereits an die Stelle gefördert werden, die über der endgültigen Palettierposition liegt.

Bei einer bevorzugten Ausführungsform weist das Transportband einen horizontalen Förderbereich und einen sich daran anschließenden vertikalen Umlenkbereich auf. Eine solche Ausgestaltung hat zur Folge, daß der Platzbedarf für die Palettiervorrichtung klein gehalten werden kann.

Es ist ferner zweckmäßig, daß das Transportband höheneinstellbar ist. Hierdurch kann die Abwurfhöhe individuell an die unterschiedlich zu stapelnden Güter angepaßt werden.

Besonders vorteilhaft ist es, daß die Auflageeinrichtung eine Rollenbahn ist, die zur Freigabe des aufliegenden, zu palettierenden Guts quer zur Ablage bzw. Abwurfrichtung verfahrbar ist. Eine derartige Rollenbahn ist eine besonders zuverlässige und einfache Ablagevorrichtung.

Schließlich wird noch vorgeschlagen, daß die Auflageeinrichtung mindestens ein zur Freigabe der Ablage bzw. des Abwurfs verfahrbares Transportband ist. Auch ein horizontal verfahrbares Transportband stellt eine vorteilhafte Lösung für die Auflageeinrichtung dar.

Nachstehend werden bevorzugte Ausführungsformen anhand der Zeichnung im einzelnen beschrieben. Es zeigen:
- Figur 1a: - eine schematische Seitenansicht der Palettiervorrichtung in einer ersten Transportphase eines Papiersackstapels,
- Figur 2: - eine zu Figur 1a korrespondierende Draufsicht,
- Figur 2a: - die Darstellung gemäß Figur 1a in einer zweiten Phase,
- Figur 2b: - eine zu Figur 2a korrespondierende Draufsicht,
- Figur 3a: - eine Seitenansicht der Palettiervorrichtung in einer dritten Phase,
- Figur 3b: - eine zu Figur 3a korrespondierende Draufsicht,
- Figur 4a: - die Palettiervorrichtung in Seitenansicht in einer vierten Phase,
- Figur 4b: - eine zu Figur 4a korrespondierende Darstellung,

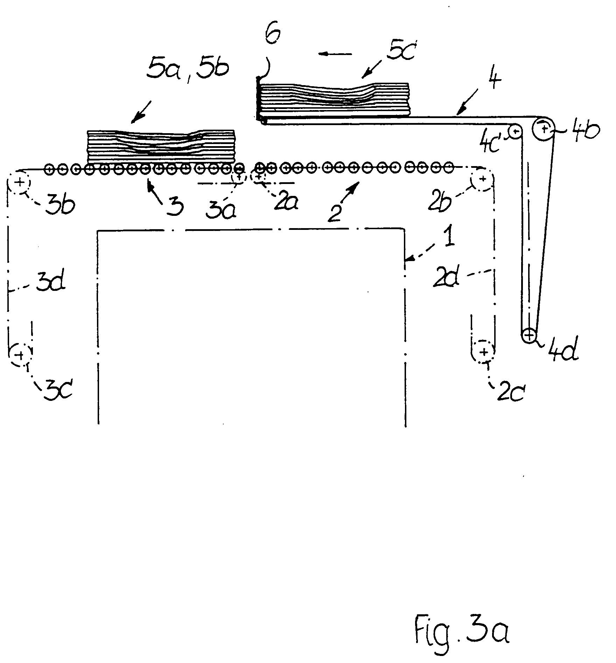

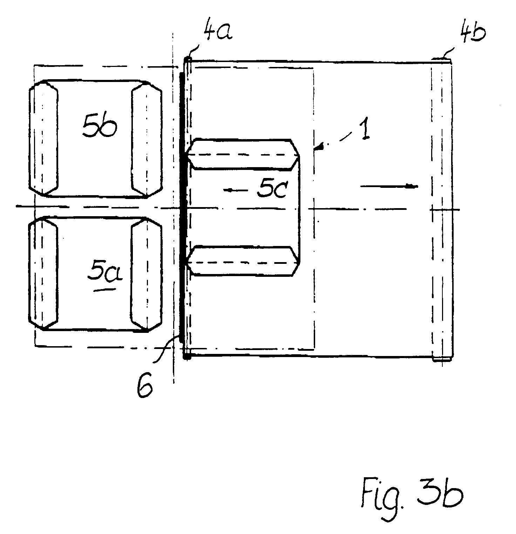

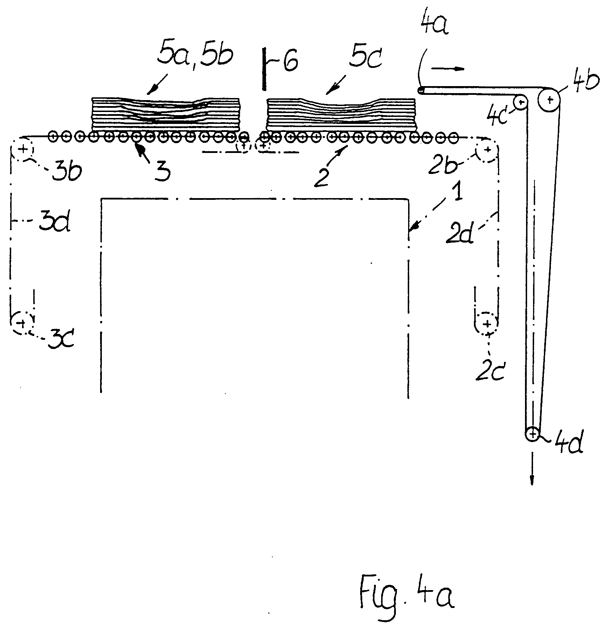

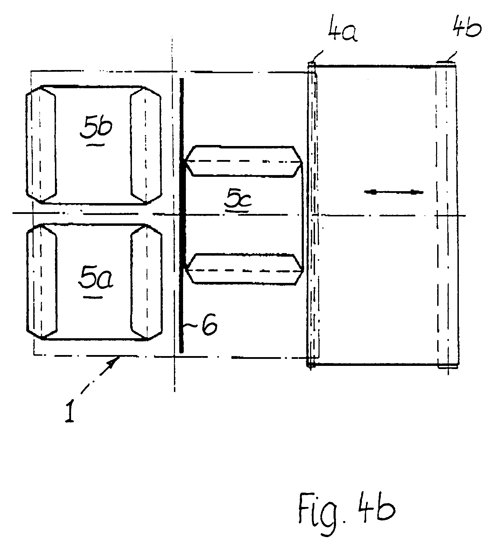

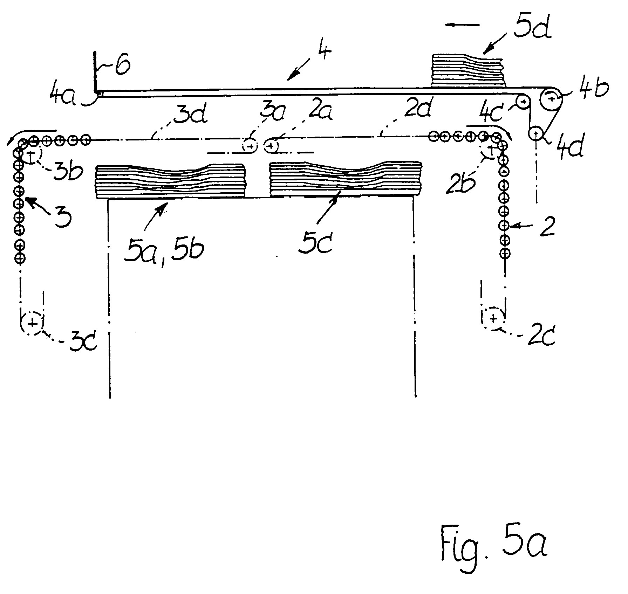

- Figur 5a: - eine Seitenansicht der Palettiervorrichtung in einer fünften Phase,

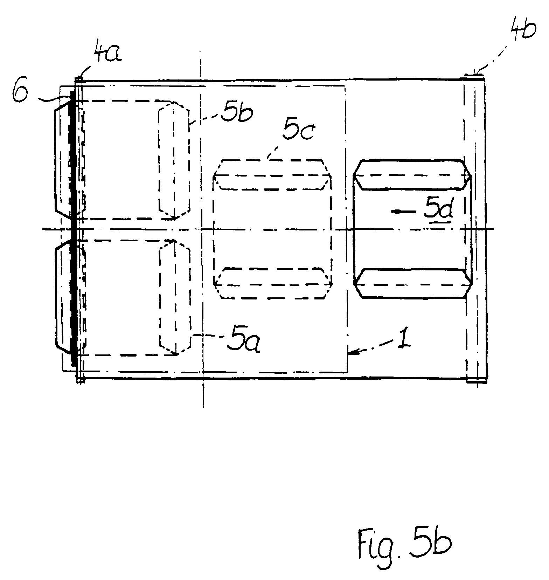

- Figur 5b: - eine zu Figur 5a korrespondierende Draufsicht.

In den Zeichnungen sind als zu palettierende Güter Papiersackstapel gezeigt, welche die Bezeichnungen 5a, 5b, 5c und 5d aufweisen.

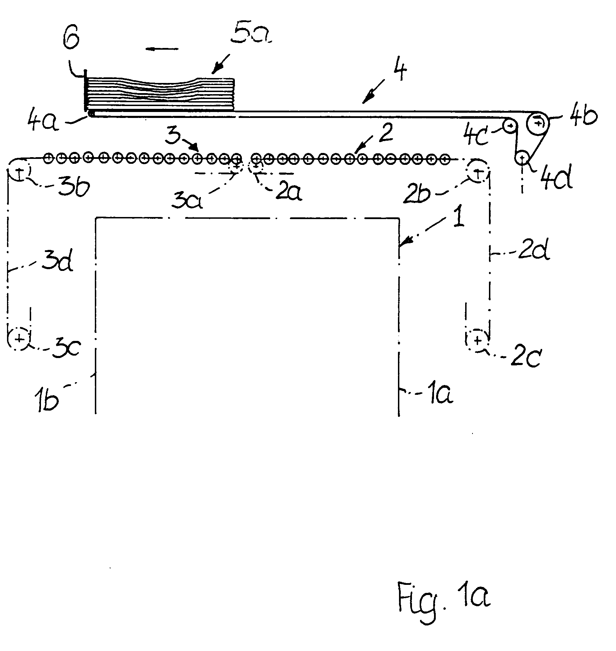

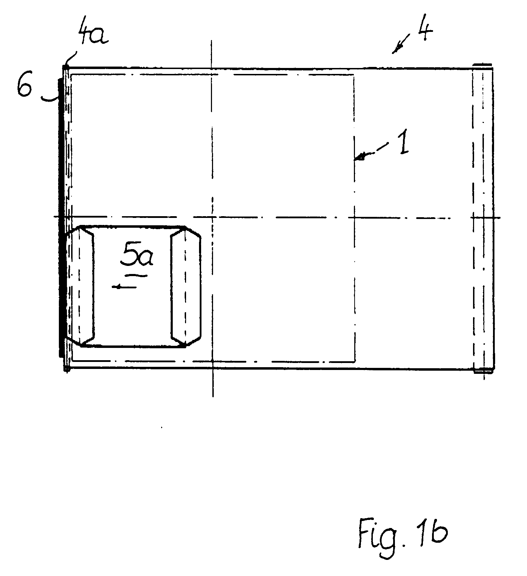

In Figur 1 ist ein Papiersackstapel 5a ersichtlich, der auf dem oberen Trum eines Transportbandes 4 liegt. Das Transportband 4 besitzt eine frontseitige Umlenkwalze 4a und wird über zwei feststehende Walzen 4b und 4c sowie eine in vertikaler Richtung bewegliche Tänzer-Walze 4d geführt. Der Papiersackstapel 5a wird beim Vorlauf des Transportbandes 4 bis zum Anschlag 6 transportiert und dort festgehalten.

Die in Figuren 1a und 1b ersichtlichen Positionen des Papiersackstapels 5a liegen innerhalb des Grundrisses der Palette bzw. der bereits teilweise beladenen Palette 1. Der Palettenstapel besitzt eine gemäß Figur 1 rechte Stirnkante 1a und eine linke Stirnkante 1b.

Unterhalb des Transportbandes 4 befindet sich eine Auflagevorrichtung, die als Rollenbahn ausgebildet ist, wobei die Rollenbahn in der Mitte geteilt ist in die Rollenbahnstücke 2 und 3. Die Rollen der Rollenbahnstücke 2 und 3 sind über eine gemeinsame umlaufende Kette 3d miteinander gekoppelt. Die Kette 3d wird über ein stirnseitiges Kettenrad 3d, ein ortsfestes Kettenrad 3b und ein Tänzer-Kettenrad 3c geführt. Entsprechend ist die Kette 2d des gemäß Figur 1 rechten Rollenbahnstücks 2 über das stirnseitige Kettenrad 2a, das feststehende Umlenkrad 2b und das auf- und abwärts bewegliche Tänzer-Kettenrad 2c geführt.

Bei der Darstellung gemäß Figur 2b ist der Papiersackstapel 5a auf das Rollenbahnstück 3 abgeworfen. Dies geschieht dadurch, daß sich das Transportband 4 bzw. dessen Umlenkwalze 4a zur Freigabe des Papiersackstapels 5a nach rechts bewegt hat. Bei dieser Bewegung erfolgt der Längenausgleich des Transportbands 4 mittels der abwärts wandernden Tänzer-Walze 4d.

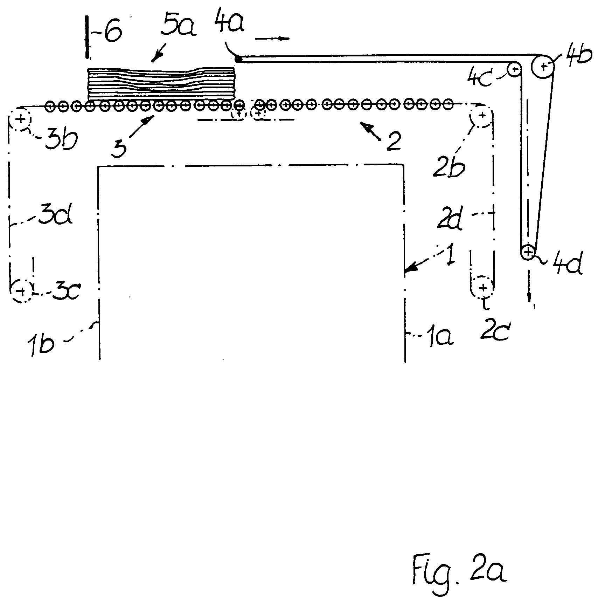

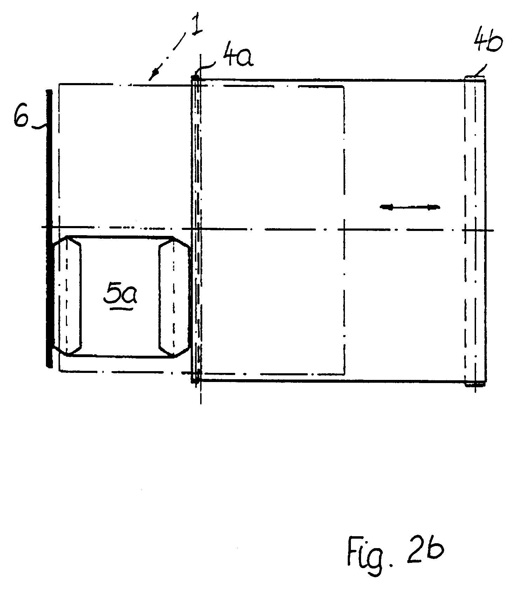

In der gleichen Weise, wie dies in Figuren 1 und 2 mit dem Papiersackstapel 5a beschrieben wurde, erfolgt die Belegung der benachbarten Position mit dem Papiersackstapel 5b. Es läuft dann der mittlere Papiersackstapel 5c gemäß Figur 3 gegen den gemäß Figur 3 nach rechts versetzten Anschlag 6. Aus dieser Position wird das Transportband 4 in die Position gemäß Figuren 4a und 4b zurückgezogen, mit der Folge, daß der Papiersackstapel 5c in die in Figuren 4a und 4b ersichtliche Position auf dem Rollenbahnstück 2 abgelegt wird.

Zur Ablage der Papiersackstapel 5a, 5b und 5c in der aus Figur 4 ersichtlichen Anordnung werden anschließend die Rollenbahnstücke 2 und 3 so weit auseinandergefahren, daß sie den gesamten Grundriß des Palettenstapels freigeben. Während dieses Abwurfvorgangs wird bereits ein neuer Papiersackstapel 5d mittels des Transportbandes 4 bis zum Anschlag 6 transportiert, der sich in der äußerst linken Position befindet. Es werden die Rollenbahnstücke 2 und 3 wieder zur Bildung einer gemeinsamen Auflageeinrichtung zusammengefahren, wie dies aus Figur 1 ersichtlich ist. Der Papiersackstapel 5d läuft gegen den Anschlag 6, und die weitere Beschickung der Palette bzw. des Palettenstapels erfolgt in der vorbeschriebenen Weise. Jeweils nach jeder Ablage einer Schicht wird die Palette um eine Schichtdicke abgesenkt.

## Patentansprüche

1. Palettiervorrichtung, insbesondere für Stapel von leeren Verpackungen oder Verpackungszuschnitten, mit einer höhenverstellbaren Palette (1) und einer oberhalb der Palette (1) angeordneten Auflageeinrichtung (2, 3), auf der die zu palettierenden Güter (5a; 5b; 5c) in ihrer Abwurfposition gehalten werden, wobei die Auflageeinrichtung quer zur Abwurfrichtung verfahrbar ist,
dadurch gekennzeichnet,
daß oberhalb der Auflageeinrichtung (2, 3) in einem mindestens einer Schichthöhe der zu palettierenden Güter (5a; 5b; 5c) entsprechenden Abstand ein Transportband (4) angeordnet ist, das mit seiner frontseitigen Umlenkung (4a) über der gesamten Grundfläche der Palette (1) verfahrbar ist, wobei ein ebenfalls über die gesamte Grundfläche, unabhängig von der Position des Transportbandes, in wählbare vorgegebene Positionen verfahrbarer Anschlag (6) vorgesehen ist.

2. Palettiervorrichtung nach Anspruch 1,
dadurch gekennzeichnet,
daß das Transportband (4) einen horizontalen Förderbereich und einen sich daran anschließenden vertikalen Umlenkbereich aufweist.

3. Palettiervorrichtung nach Anspruch 1 oder 2,
dadurch gekennzeichnet,
daß das Transportband (4) höheneinstellbar ist.

4. Palettiervorrichtung nach einem oder mehreren der Ansprüche 1 bis 3,
dadurch gekennzeichnet,
daß die Auflageeinrichtung (3, 4) eine Rollenbahn ist, die zur Freigabe des aufliegenden, zu palettierenden Guts (5a; 5b; 5c) quer zur Ablage- bzw. Abwurfrichtung verfahrbar ist.

5. Palettiervorrichtung nach einem oder mehreren der Ansprüche 1 bis 4,
dadurch gekennzeichnet,
daß die Auflageeinrichtung mindestens ein zur Freigabe der Ablage bzw. des Abwurfs verfahrbares Transportband ist.

## Claims

1. Palletting device, more particularly for stacks of empty packets or packet blanks, with a height adjustable pallet (1) and a bearing support device (2,3) mounted above the pallet (1) on which the goods (5a;5b;5c) to be palletted are held in their discharge position wherein the bearing support device is movable transversely to the discharge direction, characterised in that a conveyor belt (4) is mounted above the bearing support device (2,3) at a distance corresponding at least to a layer height of the goods (5a;5b;5c) to be palleted wherein the conveyor belt can be moved with its front side deflection (4a) over the entire base surface of the pallet (1) wherein a stop (6) is provided which can likewise be moved into selectable predetermined positions over the entire base surface independently of the position of the conveyor belt.

2. Palletting device according to claim 1 characterised in that the conveyor belt (4) has a horizontal conveyor area and an adjoining vertical deflection area.

3. Palletting device according to claim 1 or 2 characterised in that the conveyor belt (4) is height adjustable.

4. Palleting device according to one or more of claims 1 to 3 characterised in that the bearing device (3,4) is a rolling track which is movable across the delivery or discharge direction to release the article (5a;5b;5c) resting thereon which is to be palletted.

5. Palletting device according to one or more of claims 1 to 4 characterised in that the bearing device is at least one conveyor belt movable to release delivery or discharge.

## Revendications

1. Dispositif de palettisation, notamment pour piles d'emballages vides ou de coupes d'emballages, lequel dispositif comprend une palette réglable en hauteur (1) et un dispositif de support (2, 3) disposé au-dessus de la palette et sur lequel les articles à palettiser (5a; 5b; 5c) sont maintenus dans leur position de déversement, ce dispositif de support étant déplaçable transversalement par rapport au sens de déversement,
caractérisé en ce
qu'une bande transporteuse (4), dont le déflecteur frontal peut être déplacé sur la surface de base totale de la palette (1), est disposée au-dessus du dispositif de support (2, 3), à un intervalle correspondant au moins à la hauteur d'un niveau de marchandises à palettiser, une butée (6) étant prévue, laquelle peut être déplacée également sur la totalité de la surface de base, indépendamment de la position de la bande transporteuse, et amenée dans une position prédéterminée, sélectionnable.

2. Dispositif de palettisation selon la revendication 1,
caractérisé en ce que
la bande transporteuse (4) présente une zone de transport horizontale et une zone de déflection verticale y faisant suite.

3. Dispositif de palettisation selon la revendication 1 ou 2,
caractérisé en ce que
la bande transporteuse (4) est réglable en hauteur.

4. Dispositif de palettisation selon une ou plusieurs revendications 1 à 3,
caractérisé en ce que
le dispositif de support (3, 4) est un transporteur à rouleaux qui peut être conduit transversalement par rapport au sens de dépôt ou de déversement aux fins de libération des marchandises (5a; 5b; 5c) à palettiser dont il est chargé.

5. Dispositif de palettisation selon une ou plusieurs revendications 1 à 4,
caractérisé en ce que
le dispositif de support consiste, au moins, en une bande transporteuse déplaçable pour le dépôt ou le déversement.
